# EUROPEAN PATENT APPLICATION

(11) **EP 4 550 544 A1**
(43) Date of publication of application: **07.05.2025**
(21) Application number: 23850468.2
(22) Date of filing: 03.08.2023
(51) Int. Cl.: H01M 50/24, H01M 50/211

(54) **BATTERY PACK**

(30) Priority: 04.08.2022 KR 20220097612
(71) Applicant: LG Energy Solution, Ltd., Seoul 07335 (KR)
(72) Inventor: SONG, Seung Min, Daejeon 34122 (KR)
(74) Representative: Plasseraud IP
(86) International application number: PCT/KR2023/011435
(87) International publication number: WO 2024/029968

(57) **Abstract**

A battery pack comprising a plurality of battery modules according to an embodiment of the present invention may include a case, partition walls configured to partition the inside of the case into a plurality of compartments, a plurality of battery modules disposed in the plurality of compartments, respectively, a cover configured to cover the plurality of compartments from an upper side of the partition walls, and a flame retardant sheet deformed between the partition walls and the cover as the cover moves.

## Description

### TECHNICAL FIELD

### CROSS-REFERENCE TO RELATED APPLICATION

The present application claims the benefit of the priority of Korean Patent Application No. 10-2022-0097612, filed on August 4, 2022, which is hereby incorporated by reference in its entirety.

### TECHNICAL FIELD

The present invention relates to a battery pack including a flame retardant sheet.

### BACKGROUND ART

In response to environmental pollution and depletion of petroleum resources, research and development on power generation based on Eco-friendly energy sources are being conducted. Particularly, research on secondary batteries is being actively conducted, and research is being conducted on various aspects such as materials, structures, processes, and systems of the secondary batteries.

In structural aspects, secondary batteries may be managed in units of modules and packs. Here, secondary battery cells are gathered to form a battery module, and battery modules are gathered to form a battery pack. In charging/discharging processes, a large amount of gas is generated by the secondary battery cells, or ignition may occur, and thus, safety management related thereto may be necessary.

According to the related art, when a lid (or cover) is expanded due to an internal pressure by the gas in the battery pack, a compartment structure of the modules may be released to generate a passage through which flame or gas are propagated, thereby increasing in risk.

### DISCLOSURE OF THE INVENTION

### TECHNICAL PROBLEM

An object of the present invention for solving the above problem is to provide a battery pack in which a compartment structure is maintained even if a cover moves as an internal pressure of the battery pack increases.

### TECHNICAL SOLUTION

A battery pack comprising a plurality of battery modules according to an embodiment of the present invention may include a case, partition walls configured to partition the inside of the case into a plurality of compartments, a plurality of battery modules disposed in the plurality of compartments, respectively, a cover configured to cover the plurality of compartments from an upper side of the partition walls, and a flame retardant sheet deformed between the partition walls and the cover as the cover moves.

### ADVANTAGEOUS EFFECTS

According to the preferred embodiment of the present invention, even if the structure is deformed due to the increase in internal pressure, the compartment structure may be maintained.

According to the preferred embodiment of the present invention, the flame and gas may be prevented from being diffused through the passage provided by the structural deformation.

### BRIEF DESCRIPTION OF THE DRAWINGS

FIG. 1 is a perspective view of a battery pack according to an embodiment of the present invention.
FIG. 2 is a plan view of the battery pack from which a cover is removed according to an embodiment of the present invention.
FIG. 3 is a side view illustrating an arrangement of a frame retardant sheet according to an embodiment of the present invention.
FIG. 4 is a side view illustrating a deformation in shape of the frame retardant sheet according to an embodiment of the present invention.
FIG. 5 is a side view of a battery pack according to another embodiment of the present invention.
FIG. 6 is a side view illustrating an arrangement of a frame retardant sheet according to another embodiment of the present invention.
FIG. 7 is a side view illustrating a deformation in shape of the frame retardant sheet according to another embodiment of the present invention.
FIG. 8 is a side view illustrating the battery pack in which an increase in internal pressure occurs according to another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

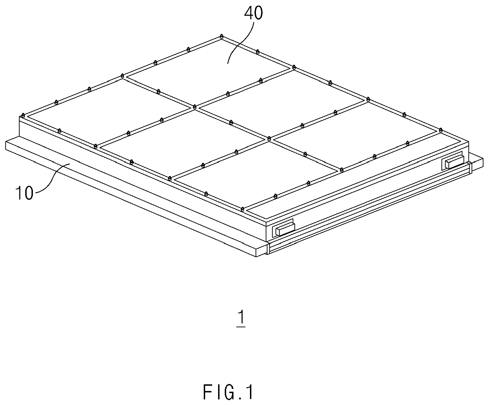

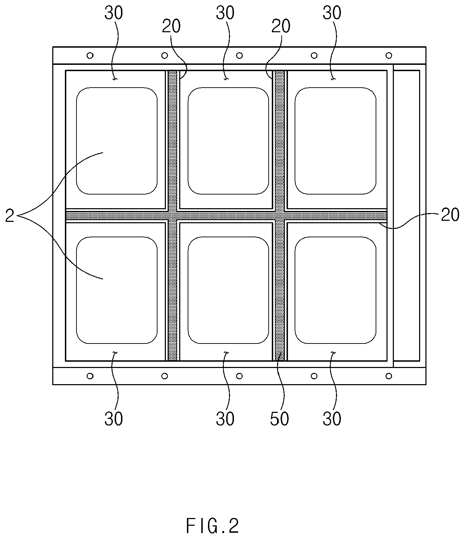

FIG. 1 is a perspective view of a battery pack according to an embodiment of the present invention, and FIG. 2 is a plan view of the battery pack from which a cover is removed according to an embodiment of the present invention.

A battery pack 1 may include a plurality of battery modules 2. The battery modules 2 may be provided to enable electrical connection between the inside of the battery pack 1 and the outside of the battery pack 1.

Referring to FIG. 1, the battery pack 1 may include a case 10. The case 10 may define a portion of an outer appearance of battery pack 10. For example, the case 10 may define lower and side portions of the battery pack 1.

The battery pack 1 may include a cover 40. The cover 40 may cover an opened upper portion of the case 10. For example, the cover 40 may be disposed to cover the upper portion of the case 10. In other words, the cover 40 may cover a plurality of compartments 30, which will be described later, at upper sides of partition walls 20, which will be described later.

The case 10 and the cover 40 may define an inner space in which the battery modules 2 are accommodated. For example, the case 10 may define side and lower portions of the battery pack 1, and the cover 40 may covers the opened upper portion of the case 10 and define an upper portion of the battery pack 1. A space surrounded by the case 10 and the cover 40 may form the inner space in which the battery modules 2 are accommodated.

The battery pack 1 may include a plurality of compartments 30. For example, the plurality of compartments 30 may be provided to accommodate the battery modules 2 in the inner space of the battery pack 1, but each of the battery modules 2 may be accommodated in an independent space.

The battery pack 1 may include partition walls 20. For example, the partition walls 20 may divide the inside of the case 10 into the plurality of compartments 30. In other words, the partition walls 20 may be disposed to pass through the inner space of the battery pack 1 so that the inside of the battery pack 1 (or the case 10) is partitioned (or divided) into the plurality of compartments 30.

The battery modules 2 may be disposed (or accommodated) in the plurality of compartments 30. For example, each of the battery modules 2 may be disposed in each of the plurality of compartments 30, but is not limited thereto.

The battery pack 1 may include a flame retardant sheet 50. The flame retardant sheet 50 may be disposed between the partition walls 30 and the cover 40. For example, the flame retardant sheet 50 may be disposed along an upper portion of each of the partition walls 30 between the partition walls 30 and the cover 40. In other words, the flame retardant sheet 50 may be coupled to each of the partition walls 30 and the cover 40 between the partition walls 30 and the cover 40. The flame retardant sheet 50 may be disposed along the upper portions of the partition walls 20 to suppress the propagation of the flame or gas between the plurality of compartments 30.

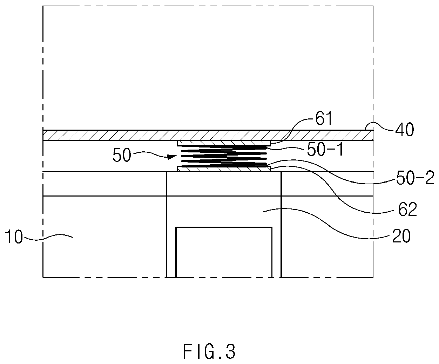

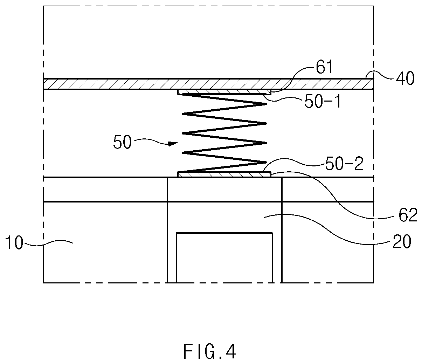

FIG. 3 is a side view illustrating an arrangement of the frame retardant sheet 50 according to an embodiment of the present invention, and FIG. 4 is a side view illustrating a deformation in shape of the frame retardant sheet 50 according to an embodiment of the present invention.

The flame retardant sheet 50 may be attached to the partition walls 20 and the cover 40. For example, a sheet upper portion 50-1 of the flame retardant sheet 50 may be attached to the cover 40. In addition, a sheet lower portion 50-2 of the flame retardant sheet 50 may be attached to the partition walls 20. The flame retardant sheet 50 may be installed in a folded state. For example, the flame retardant sheet 50 may be installed in the folded state by being pressed by the partition walls 20 and the cover 40 between the partition walls 20 and the cover 40.

The battery pack 1 may include an upper adhesive member 61 and a lower adhesive member 62. For example, each of the upper adhesive member 61 and the lower adhesive member 62 may be a double-sided tape. The upper adhesive member 61 may attach the flame retardant sheet 50 (or the sheet upper portion 50-1) to the cover 40. The lower adhesive member 62 may attach the flame retardant sheet 50 (or the sheet lower portion 50-1) to the partition walls 20.

The flame retardant sheet 50 may be deformed in shape. For example, the flame retardant sheet 50 may be deformed in shape between the partition walls 20 and the cover 40 as the cover 40 moves. The flame retardant sheet 50 may be provided in a wrinkled or folded state between the partition walls 20 and the cover 40. For a specific example, the flame retardant sheet may be unfolded upward when the cover 40 moves upward due to an increase in the internal pressure of the plurality of compartments 30 by the plurality of battery modules 2. As the flame retardant sheet 50 is unfolded, even when the cover 40 moves upward, the movement of the flame or gas between the plurality of compartments 30 may be suppressed. In other words, the flame retardant sheet 50 may prevent the flame or gas from being diffused through a passage provided by the structural deformation between the compartments 30.

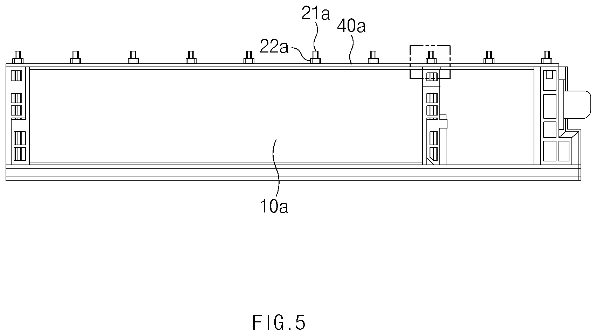

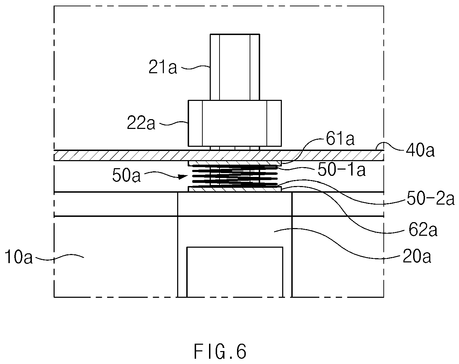

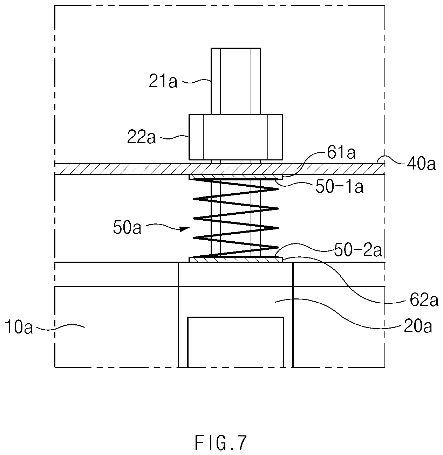

FIG. 5 is a side view of a battery pack according to another embodiment of the present invention, FIG. 6 is a side view illustrating an arrangement of a frame retardant sheet according to another embodiment of the present invention, and FIG. 7 is a side view illustrating a deformation in shape of the frame retardant sheet according to another embodiment of the present invention.

A battery pack 1a may include an extension part 21a. For example, the extension part 21a may be a portion extending from each of partition walls 20a. Specifically, the extension part 21a may extend upward from each of the partition walls 20a to pass through a cover 40a.

The battery pack 1a may include a support member 22a. For example, the support member 22a may be mounted on the extension part 21a. The support member 22a may be mounted to surround the extension part 21a.

The support member 22a may be mounted on the extension part 21a and may be provided to support the cover 40a from an upper side. For example, the cover 40a may be disposed between the support member 22a and a flame retardant sheet 50a. The support member 22a may be mounted on the extension part 21a to support the cover 40a from above so that movement of the cover 40a is suppressed to a predetermined degree. In this case, when the cover 40a moves upward, the support member 22a may suppress the movement of the cover 40a to the predetermined degree.

The flame retardant sheet 50a may be inserted into the extension part 21a. For example, the flame retardant sheet 50a may have holes penetrating in a vertical direction so as to be inserted into the extension part 21a. In other words, the flame retardant sheet 50a may be folded or unfolded as the cover 40a moves in the state of being inserted into the extension part 21a.

The flame retardant sheet 50a may be unfolded or folded along an extension direction of the extension part 21a. For example, a sheet upper portion 50-1a of the flame retardant sheet 50a may be attached to the cover 40a, and a sheet lower portion 50-2a may be attached to the partitions 20a. When the cover 40a moves upward due to an increase in internal pressure caused by the plurality of battery modules 2, the flame retardant sheet 50a may be unfolded in a direction in which the extension part 21a extends (e.g., upward from the partitions 20a). Alternatively, a section in which the flame retardant sheet 50a is folded along the extension direction of the extension part 21a in a section in which the flame retardant sheet 50a is folded may be provided. The flame retardant sheet 50a may be unfolded or folded along the extension direction of the extension part 21a by the movement of the cover 40a in the state of being inserted into the extension part 21a. Even when the cover 40a is lifted due to the increase in internal pressure, the movement of the flame or gas between the plurality of compartments (e.g., reference numeral 30) may be suppressed due to blocking of the flame retardant sheet 50a.

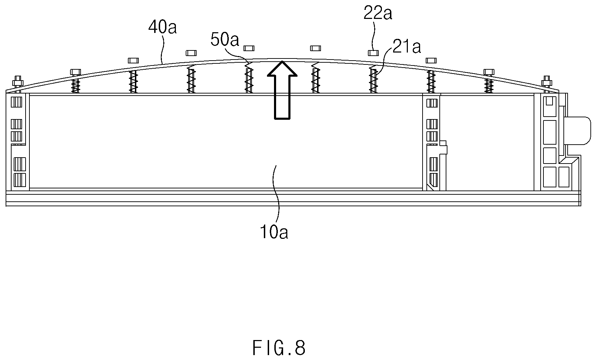

FIG. 8 is a side view illustrating the battery pack 1a in which an increase in internal pressure occurs according to another embodiment of the present invention.

When the cover 40a is lifted due to an increase in internal pressure caused by the battery modules 2, the support member 22a may support (or press) the cover 40a from an upper side to suppress the movement of the cover 40a. If the increase in internal pressure due to the battery modules 2 becomes larger, the support member 22a may be detached from the extension part 21a. In this case as well, the flame retardant sheet 50a may be unfolded along the moving cover 40a. Since the flame retardant sheet 50a is unfolded or folded as the cover 40a moves, the flame retardant sheet 50a may block a moving path of the flame or gas between the compartments 30.

When a lid (or cover) is expanded due to the internal pressure between the plurality of compartments (e.g., reference numeral 30) inside the battery packs 1 and 1a, the compartment structure may be released to generate a passage through which the flame or gas are propagated, thereby increasing in risk. As described above, the flame retardant sheets 50 and 50a may maintain the compartment structure even when the structure is deformed due to the increase in internal pressure. Therefore, the flame or gas may be prevented from being diffused through the passage provided by the structural deformation to improve stability of the battery packs 1 and 1a.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1, 1a: Battery pack
2: Battery modules
10, 10a: Case
20, 20a: Partition walls
21, 21a: Extension part
22, 22a: Support member
30, 30a: Plurality of compartments
40,40a: Cover
50,50a: Flame retardant sheet
50-1, 50-1a: Sheet upper portion
50-2, 50-2a: Sheet lower portion
61: Upper adhesive member
62: Lower adhesive member

## Claims

1. A battery pack comprising a plurality of battery modules, the battery pack comprising:
a case;
partition walls configured to partition the inside of the case into a plurality of compartments;
a plurality of battery modules disposed in the plurality of compartments, respectively;
a cover configured to cover the plurality of compartments from an upper side of the partition walls; and
a flame retardant sheet deformed between the partition walls and the cover as the cover moves.

2. The battery pack of claim 1, wherein the flame retardant sheet is installed in a folded state between the partition walls and the cover.

3. The battery pack of claim 1, wherein the flame retardant sheet is unfolded upward when the cover moves upward due to an increase in internal pressure by the plurality of battery modules.

4. The battery pack of claim 1, wherein the flame retardant sheet comprises:
a sheet upper portion attached to the cover; and
a sheet lower portion attached to the partition walls.

5. The battery pack of claim 1, wherein the flame retardant sheet is disposed along upper portions of the partition walls to suppress propagation of flame or a gas between the plurality of compartments.

6. The battery pack of claim 1, further comprising:
an upper adhesive member configured to attach the flame retardant sheet to the cover; and
a lower adhesive member configured to attach the flame retardant sheet to the partition walls.

7. The battery pack of claim 1, wherein the flame retardant sheet is configured to suppress movement of flame or a gas between the plurality of compartments.

8. The battery pack of claim 1, further comprising:
extension parts extending upward to pass from the partition walls to the cover; and
support members extending from the extension parts to support the cover at an upper side.

9. The battery pack of claim 8, wherein the flame retardant sheet has a hole penetrated in a vertical direction so as to be inserted into the extension parts.

10. The battery pack of claim 9, wherein the flame retardant sheet comprises:
an upper portion attached to the cover; and
a lower portion attached to the partition walls,
wherein the flame retardant sheet is unfolded along the extension direction of the extension parts when the cover moves upward due to an increase in internal pressure by the plurality of battery modules.
